# EUROPÄISCHE PATENTSCHRIFT

(11) **EP 1 424 520 B1**
(45) Veröffentlichungstag und Bekanntmachung des Hinweises auf die Patenterteilung: **25.01.2006**
(21) Anmeldenummer: 03026714.0
(22) Anmeldetag: 21.11.2003
(51) Int. Cl.: F16L 3/26, H02G 3/36

(54) **Befestigungsvorrichtung für einen länglichen Gegenstand, insbesondere Kabelbaum**
Mounting device for an oblong article, in particular wiring harness
Dispositif de support pour un article oblong, en particulier harnais de câblage

(30) Priorität: 29.11.2002 DE 10256144
(43) Veröffentlichungstag der Anmeldung: 02.06.2004
(73) Patentinhaber: Newfrey LLC, Newark, Delaware 19711 (US)
(72) Erfinder: Rosemann, Frank, 35519 Rockenberg (DE); Reindl, Johann, 35444 Biebertal (DE); Kumpf, Markus, 35466 Allertshausen (DE)
(74) Vertreter: Haar, Lucas Heinz Jörn

(56) Entgegenhaltungen:
- DE-U- 1 975 273
- DE-U- 29 500 680
- US-A- 4 697 774
- US-A- 4 811 922

## Beschreibung

Die Erfindung betritt eine Befestigungsvorrichtung für einen länglichen Gegenstand, insbesondere einen Kabelbaum, mit einem Halter, der zur Anbringung des länglichen Gegenstandes bestimmt ist und eine Anlagefläche für den länglichen Gegenstand hat, und mit einem mit dem Halter verbindbaren Befestigungselement zur Befestigung des Halters an einem Bauteil, wobei zur Verbindung des Halters (1) mit dem Befestigungselement eine zusammensteckbare Schnappkupplung vorgesehen ist, die durch eine gegen die Oberseite des Halters gerichtete Kraft schließbar ist und eine in Längsrichtung des Kabelbaumes verschiebliche Verbindung zwischen dem Halter und dem Befestigungselement zur Verfügung stellt.

Befestigungsvorrichtungen der angegebenen Art werden vornehmlich zur Befestigung von Kabelbäumen in Kraftfahrzeugen verwendet. Unter einem Kabelbaum wird ein Bündel elektrischer Leitungen verstanden, die sich in gleicher Richtung erstrecken und durch Umwickeln mit einem Band zu einer baulichen Einheit verbunden sind. Zur Befestigung an einem Bauteil wird der Kabelbaum mit einem Band mit dem Halter der Befestigungsvorrichtung verbunden und dann mit Hilfe des an dem Halter angebrachten Befestigungselementes an dem Bauteil befestigt. Zum Ausgleich von fertigungsbedingten Maßabweichungen kann hierbei der Halter gegenüber dem Befestigungselement in Längsrichtung des Kabelbaumes verschiebbar ausgeführt sein.

Bei einer aus DE 295 10 148 U1 bekannten Befestigungsvorrichtung weist der plattenförmige Halter ein Langloch auf. In das Langloch ist ein Haltestift eingesetzt, dessen Befestigungsende von dem Halter absteht und der eine Ausnehmung hat, in die Abschnitte der Ränder des Langloches eingreifen. Zum Verbinden von Halter und Haltestift wird der Haltestift mit seinem Befestigungsende voran in das Langloch so weit hineingedrückt, bis die Ränder des Langloches in die Ausnehmung im Haltestift einschnappen. Erst wenn beide Teile miteinander verbunden sind, kann der Halter mit dem Kabelbaum verbunden werden. Die Möglichkeit, Halter und Befestigungselement wieder voneinander zu trennen, ist nicht vorgesehen.

Es ist weiterhin aus US 5,112,013 eine Vorrichtung zum Befestigen von Kabelbäumen in Kraftfahrzeugen bekannt, welche ein den Kabelbaum umschlingendes Band und ein Befestigungselement zum Befestigen des Bandes an einem Bauteil aufweist. An dem Band ist ein Querstück vorgesehen, das sich in Längsrichtung des Kabelbaumes erstreckt und in eine Führungsnut des Befestigungselementes einführbar ist, in der es zum Ausgleich von Maßtoleranzen in Längsrichtung des Kabelstranges verschiebbar ist. Befestigungselement und Band werden hierbei vor der Montage miteinander verbunden und können dann nicht mehr voneinander getrennt werden.

Bei einer aus US-A-4,697,774 bekannten Befestigungsvorrichtung weist das eine Kupplungsteil einen Schlitz auf, in den zwei sich in Längsrichtung und parallel zum Schlitz erstreckende Zähne angeordnet sind, die durch den Schlitz zugänglich sind. Die Zähne sind zueinander symmetrisch ausgebildet und weisen eine geneigte Einführrampe und eine Rückhalteraste auf. Das andere Kupplungsteil ist mit einem Schnappvorsprung in Form einer länglichen Rippe versehen, die sich längs eines streifenförmigen Körpers erstreckt und einen pfeilspitzenförmigen Querschnitt hat, der zum Einschnappen zwischen den Zähnen ausgebildet ist. Zur Befestigung eines Kabelkanals weist das andere Kupplungsteil auf der dem Vorsprung entgegengesetzten Seite ein sich quer zur Längsrichtung des Vorsprungs erstreckenden Befestigungskopf auf, der in eine passende Öffnung des Kabelkanals einsetzbar ist. Zum Verbinden wird das zweite Kupplungsteil mit seinem Vorsprung in den Schlitz des ersten Kupplungsteils so weit hineingedrückt, daß die Zähne das im Querschnitt pfeilspitzenförmige Ende des Vorsprungs umgreifen. In dieser eingeschnappten Position ist das zweite Kupplungsteil relativ zum ersten in Längsrichtung verschiebbar. Diese Befestigungsvorrichtung hat den Nachteil, daß, bedingt durch die Länge der Zähne, eine vergleichsweise hohe Zusammendrückkraft erforderlich ist.

Der Erfindung liegt die Aufgabe zugrunde, eine Befestigungsvorrichtung der eingangs genannten Art zu schaffen, die sich durch eine besonders einfache Montage auszeichnet und verschiedene Montageweisen zur Verfügung stellt.

Diese Aufgabe wird durch die im Patentanspruch 1 angegebene Erfindung gelöst. Vorteilhafte Ausgestaltungen der Erfindung sind Gegenstand der Unteransprüche.

Bei der erfindungsgemäßen Befestigungsvorrichtung ist zur Verbindung des Halters mit dem Befestigungselement eine zusammensteckbare Schnappkupplung vorgesehen, die durch eine gegen die Anlagefläche des Halters gerichtete Kraft schließbar ist. Hierdurch ergeben sich verschiedene Vorteile bei der Montage. Wird der Halter vor der Anbringung des Kabelbaumes mit dem Befestigungselement verbunden, so kann der Halter in die Kupplungsposition zum Befestigungselement gebracht werden und dann durch leichten Druck auf die Anlagefläche des Halters die Kupplung eingeschnappt werden. Eine andere einfache Montagemöglichkeit besteht darin, das Befestigungselement auf den mit seiner Anlagefläche auf einer Unterlage aufliegenden Halter von oben aufzusetzen und anzudrücken. Beide Montagearten lassen sich sowohl von Hand als auch automatisch leicht ausführen.

Die erfindungsgemäße Gestaltung läßt es aber auch zu, den Halter getrennt vom Befestigungselement mit dem Kabelbaum zu verbinden und erst anschließend das Befestigungselement und den Halter zusammenzustecken. Dies kann vorteilhaft sein, da dann bei der Montage von Halter und Kabelbaum das von dem Halter abstehende Befestigungselement nicht stört. Die erfindungsgemäße Gestaltung ist weiterhin von Vorteil, wenn eine getrennte Montage von Befestigungselement und Kabelbaum im Fahrzeug gewünscht wird. So kann es bei manchen Anwendungen vorteilhaft sein, eine Reihe von Befestigungselementen mit Hilfe geeigneter Setzvorrichtungen manuell oder mit einem Roboter im Fahrzeug zu montieren und dann anschließend den bereits mit Haltern versehenen Kabelbaum durch Zusammenstecken der Schnappkupplungen mit den gesetzten Befestigungselementen zu verbinden. Da das Schließen der Schnappkupplungen weniger Kraftaufwand erfordert als das Setzen der Befestigungselemente, läßt sich durch eine solche Verfahrensweise die Montage des Kabelbaumes vereinfachen.

Ein weiterer Vorteil der erfindungsgemäßen Befestigungsvorrichtung liegt in der Möglichkeit, unterschiedliche Größen oder Ausführungen des Halters einerseits und des Befestigungselementes andererseits nach Art eines Baukastenprinzips miteinander zu kombinieren. So können beispielsweise Befestigungselemente für verschiedene Lochgrößen im Bauteil hergestellt und mit der gleichen Halterausführung komplettiert werden. Ebenso können unterschiedliche Gestaltungen des Halters an der gleichen Ausführung des Befestigungselementes befestigt werden. Auf diese Weise läßt sich mit geringen Werkzeugkosten eine Vielzahl von Anwendungserfordernissen erfüllen.

Die Schnappkupplung stellt eine in Längsrichtung des Kabelbaumes verschiebliche Verbindung zwischen dem Halter und dem Befestigungselement zur Verfügung. Durch diese verschiebliche Verbindung können Maßabweichungen zwischen der Position zweier benachbarter Halter und der Position der Befestigungsstellen des Bauteiles ausgeglichen werden. Hierzu weist das eine Kupplungsteil der Schnappkupplung eine Ausnehmung mit Hinterschnitt und das andere Kupplungsteil wenigstens einen in die Ausnehmung einsteckbaren, federnden Zapfen auf, der einen in den Hinterschnitt der Ausnehmung einschnappenden, seitlichen Vorsprung hat.

Die Ausnehmung hat erfindungsgemäß nach Art eines Langloches eine größere Erstreckung in Längsrichtung des Halters als der in den Halter einsteckbare, federnde Zapfen, um auf diese Weise eine Verschiebbarkeit des Halters gegenüber dem Befestigungselement zu ermöglichen und zur Erleichterung der Montage ist der gegenüber dem Befestigungselement verschiebliche Halter in einer Mittelstellung festhaltbar, aus der eine Verschiebung in entgegengesetzte Richtungen mit definiertem Kraftaufwand möglich ist, wobei der Halter durch formschlüssig ineinandergreifende Mittel gegen Verdrehen gegenüber dem Befestigungselement gesichert ist. Durch die formschlüssig ineinandergreifenden Mittel wird die Schnappkupplung entlastet und die Beibehaltung einer definierten Halterposition gewährleistet.

Der Halter oder das Befestigungselement kann zum Festhalten in der Mittelstellung Vorsprünge haben, an denen sich das jeweils andere Bauteil abstützt und die durch eine erhöhte Verschiebekraft überwindbar sind. Weiterhin kann zur Verdrehsicherung das Befestigungselement zwei Rippen aufweisen, die den Halter an seinen Längsseiten umgreifen.

Eine bevorzugte Ausgestaltung sieht vor, daß der Halter auf seiner der Anlagefläche abgekehrten Unterseite zwei nach unten abstehende Finger mit seitlich vorspringenden Rastnasen hat. Jeder Finger kann an einem durch zwei parallele Schlitze gebildeten, elastisch verformbaren Steg des Halters angebracht sein. Diese Gestaltung ermöglicht eine einfache Gießform zur Herstellung des Halters und sorgt für eine geeignete Flexibilität der Finger.

Nach einem weiteren Vorschlag der Erfindung ist die Schnappkupplung so ausgebildet, daß sie nach dem Verriegeln mit Hilfe eines Werkzeuges wieder lösbar ist. Hierdurch kann der Kabelbaum zum Zwecke einer Reparatur ohne Zerstörung oder Beschädigung der Befestigungsvorrichtung auf einfache Weise demontiert werden.

Das Befestigungselement weist erfindungsgemäß auf der dem Halter abgekehrten Seite einen Haltestift auf, der in einem Loch eines Bauteils vorzugsweise mit Hilfe eines federnden Rastelementes verankerbar ist. Zur Abstützung an dem Bauteil kann das Befestigungselement einen Flansch aufweisen, der das an das Befestigungselement angeschlossene Befestigungsende des Haltestiftes umgibt. Der Umfangsrand des Flansches kann außerdem mit einer Dichtlippe, vorzugsweise aus weicherem Material, versehen sein. Das Kupplungsteil des Befestigungselementes weist vorzugsweise einen rechteckigen Rahmen mit einer rechteckigen Rahmenöffnung auf, wobei die längeren Schenkel des Rahmens mit dem Flansch durch Stützen verbunden sind, die sich quer zur Rahmenebene erstrecken. Durch die Stützen wird ein Freiraum zwischen dem Rahmen und dem Flansch geschaffen, der an den Schmalseiten des Rahmens zugänglich ist und dadurch das Lösen der in den Rahmen eingeschnappten Kupplungsteile des Halters mit Hilfe eines Werkzeugs ermöglicht.

Die Erfindung wird nachfolgend anhand eines Ausführungsbeispiels näher erläutert, das in der Zeichnung dargestellt ist. Es zeigen:
- Fig. 1: eine perspektivische Darstellung eines Halters,
- Fig. 2: eine perspektivische Darstellung eines Befestigungselementes,
- Fig. 3: eine perspektivische Darstellung der miteinander verbundenen Teile der Befestigungsvorrichtung, im wesentlichen von der Seite gesehen, und
- Fig. 4: eine perspektivische Darstellung der miteinander verbundenen Teile schräg von oben gesehen.

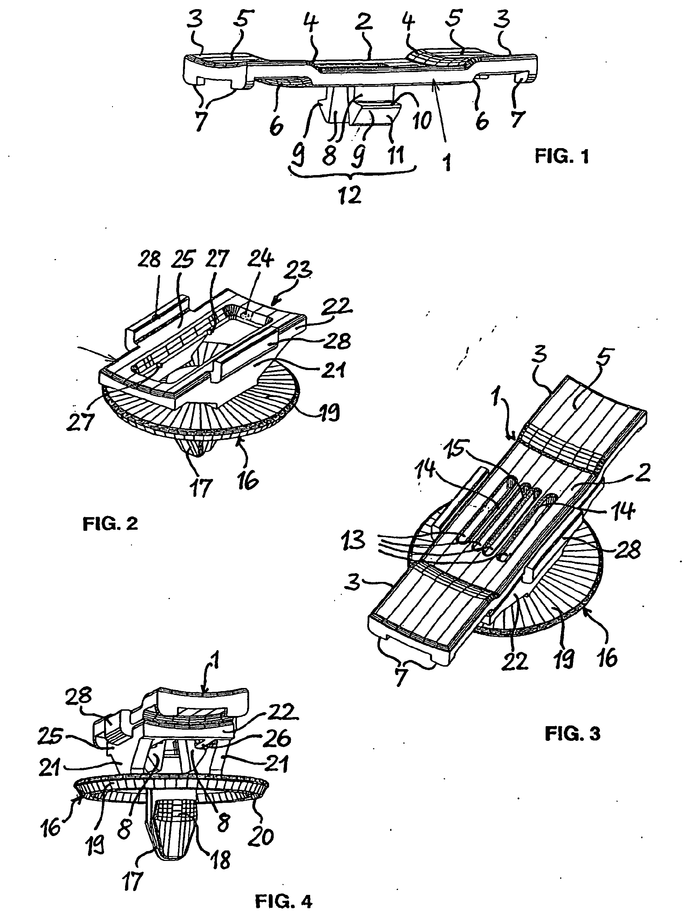

Figur 1 zeigt den Halter 1 der Befestigungsvorrichtung. Der Halter 1 besteht aus einer im wesentlichen rechteckigen Platte, die in einen Mittelabschnitt 2 und zwei die schmalseitigen Enden bildende Endabschnitte 3 gegliedert ist. Die Endabschnitte 3 sind an den Mittelabschnitt 2 jeweils mit einer auf der Oberseite des Halters 1 erhabenen, stumpfkantigen Stufe 4 angeschlossen. Dies hat zur Folge, däß die Oberseite des Mittelabschnittes 2 von oben gesehen tiefer liegt als die von den Oberseiten der Endabschnitte 3 gebildeten Anlageflächen 5 für den an dem Halter 1 zu befestigenden Kabelbaum. Den einander zugekehrte Stufen 4 auf der Oberseite des Halters 1 entsprechen voneinander abgekehrten Stufen 6 auf seiner Unterseite. Den Stufen 6 liegen Vorsprünge 7 gegenüber, die an den äußeren Ecken der Endabschnitte 3 ausgebildet sind. Die Stufen 6 und die Vorsprünge 7 dienen zur seitlichen Lagesicherung von Bändern, die zur Befestigung eines Kabelbaumes um diesen und um die Endabschnitte geschlungen bzw. gewickelt werden. Zur besseren Anpassung des Halters 1 an die Umfangskontur eines Kabelbaumes sind außerdem die Endabschnitte 3 und der Mittelabschnitt 1 mit einer auf der Oberseite konkaven Krümmung versehen, deren Krümmungsachse auf der Längsmittelebene des Halters 1 liegt.

Zur Befestigung des Halters 1 weist der Mittelabschnitt 2 an seiner Unterseite zwei nach unten abstehende, federnde Finger 8 auf. Die Finger 8 sind symmetrisch zu einer den Halter 1 teilenden Längsmittelebene angeordnet und haben auf ihren einander abgekehrten Seiten jeweils eine Rastnase 9 mit einer dem Mittelabschnitt 2 zugekehrten Sperrfläche 10 und einer dem Mittelabschnitt 2 abgekehrten Rampenfläche 11. Die Finger 8 bilden gemeinsam ein erstes Kupplungsteil 12 einer zweiteiligen Schnappkupplung.

Die Finger 8 sind elastisch verformbar mit dem Mittelabschnitt 2 des Halters 1 verbunden. Wie aus Figur 3 zu ersehen, weist der Mittelabschnitt 2 vier parallele, ihn vollständig durchdringende Schlitze 13 auf. Durch die Schlitze 13 werden zwei äußere Stege 14 und ein mittlerer Steg 15 gebildet. An jedem der äußeren Stege 14 ist ein Finger 8 angebracht. Die Stege 14 bilden hierbei elastisch verformbare Elemente, die federnd nachgeben, wenn auf die freien Enden der Finger 8 eine diese einander annähernde Kraft einwirkt. Hierdurch wird ein federndes Zusammendrücken der Finger 8 für das Zusammenstecken der Schnappkupplung ermöglicht.

Figur 2 zeigt ein Befestigungselement 16, das zur Verbindung des Halters 1 mit einem nicht näher dargestellten Bauteil insbesondere aus Blech bestimmt ist. Das Befestigungselement 16 hat einen Haltestift 17, der in eine Öffnung eines Bauteils einsteckbar und dort mit Hilfe eines federnden Rastelementes 18 festhaltbar ist. An dem Haltestift 17 ist ein tellerförmiger Flansch 19 angeordnet. Der Flansch 19 dient zur Abstützung des Befestigungselementes 16 an dem Bauteil. Er kann zusätzlich mit einer ringförmigen Dichtlippe 20 aus weicherem Material versehen sein, um die den Haltestift aufnehmende Öffnung des Bauteiles dicht verschließen zu können.

Auf der dem Haltestift 17 abgekehrten Seite ist an dem Flansch 19 mit Hilfe zweier Stützen 21 ein rechteckiger Rahmen 22 befestigt, der sich im wesentlichen in einer zu dem Flansch 19 parallelen Ebene erstreckt. Der Rahmen 22 bildet das zweite Kupplungsteil der zweiteiligen Schnappkupplung 23. Die Stützen 21 sind an den längeren Schenkeln des Rahmens 22 angeordnet. Der Rahmen 22 weist eine rechteckige Rahmenöffnung 24 auf. Die Breite der Rahmenöffnung 24 ist kleiner als der Abstand der Stützen 21. Hierdurch wird auf der dem Flansch 19 zugekehrten Unterseite der längeren Schenkel 25 des Rahmens 22 eine nach Art eines Hinterschnitts gegenüber der Rahmenöffnung 24 zurückspringende Anlagefläche 26 gebildet, die zur Anlage der Sperrflächen 10 an den Rastnasen 9 der Finger 8 bestimmt sind.

Die Breite der Rahmenöffnung 24 entspricht im wesentlichen dem Abstand der einander abgekehrten Seiten der Finger 8 des Halters 1. In der Rahmenöffnung 24 sind symmetrisch zur Öffnungsmitte an den Schenkeln 25 Vorsprünge 27 angebracht, deren Abstand etwas größer ist als die in Längsrichtung des Halters 1 gemessene Breite der Finger 8. An den voneinander abgekehrten Außenseiten tragen die Schenkel 25 parallele Leisten 28, deren Abstand im wesentlichen der Breite des Mittelabschnitts 2 des Halters 1 entspricht. Die Leisten 28 sind dazu bestimmt, den Halter 1 gegen Verdrehen zu sichern.

Zur Montage an dem Befestigungselement 16 wird der Halter 1 mit zu dem Rahmen 22 parallel ausgerichteter Längsachse auf diesen aufgesetzt und mit der Rahmenöffnung 23 zugekehrten Fingern 8 an das Befestigungselement 16 angedrückt. Die Finger 8 gleiten hierbei mit den Rampenflächen 11 der Rastnasen 9 über die Schenkel 25 und werden dadurch zusammengedrückt. Sobald der Halter 1 die in Figur 4 gezeigte Stellung erreicht und auf dem Rahmen 22 aufliegt, geben die Schenkel 24 die Rastnasen 9 frei, wodurch diese in die Figur 4 gezeigte Sperrstellung schnappen, in der sie mit ihren Sperrflächen 10 an den Anlageflächen 26 anliegen und den Halter 1 an dem Befestigungselement 16 festhalten. Die Leisten 28 umgreifen hierbei seitlich den Mittelabschnitt 2 und sichern dadurch den Halter 1 gegen Verdrehen.

Der Halter 1 kann sowohl mittig als auch, soweit die Länge der Rahmenöffnung 23 dies zuläßt, außermittig mit dem Befestigungselement 16 verbunden werden. Ist der Halter, wie in den Figuren 3 und 4 gezeigt, mittig montiert, so wird er durch Abstützung der Finger 8 an den Vorsprüngen 27 in dieser Lage gesichert. Durch eine in Längsrichtung auf den Halter 1 wirkende Kraft kann der Abstützwiderstand der Vorsprünge 27 jedoch überwunden werden und der Halter 1 gegenüber dem Befestigungselement 16 verschoben werden. Hierdurch können Lageabweichungen zwischen der Position des Halters 1 an einem Kabelbaum und der das Befestigungselement 16 aufnehmenden Öffnung im Bauteil ausgeglichen werden.

## Patentansprüche

1. Befestigungsvorrichtung für einen länglichen Gegenstand, insbesondere einen Kabelbaum, mit einem Halter (1), der zur Anbringung des länglichen Gegenstandes bestimmt ist und eine Anlagefläche (5) für den länglichen Gegenstand hat, und mit einem mit dem Halter (1) verbindbaren Befestigungselement (16) zur Befestigung des Halters (1) an einem Bauteil, wobei zur Verbindung des Halters (1) mit dem Befestigungselement (16) eine zusammensteckbare Schnappkupplung (12, 23) vorgesehen ist, die durch eine gegen die Oberseite des Halters (1) gerichtete Kraft schließbar ist und eine in Längsrichtung des Kabelbaumes verschiebliche Verbindung zwischen dem Halter (1) und dem Befestigungselement (16) zur Verfügung stellt, **dadurch gekennzeichnet, daß** das eine Kupplungsteil (23) der Schnappkupplung eine Ausnehmung mit Hinterschnitt und das andere Kupplungsteil (12) wenigstens einen in die Ausnehmung einsteckbaren, federnden Zapfen aufweist, der einen in den Hinterschnitt der Ausnehmung einschnappenden, seitlichen Vorsprung hat, wobei die Ausnehmung nach Art eines Langloches eine größere Erstreckung in Längsrichtung des Halters (1) hat als der in den Halter (1) einsteckbare, federnde Zapfen und der gegenüber dem Befestigungselement (16) verschiebliche Halter (1) durch Haltemittel in einer Mittelstellung an dem Befestigungselement (16) festhaltbar ist, aus der eine Verschiebung in entgegengesetzte Richtungen mit definiertem Kraftaufwand möglich ist und daß der mit dem Befestigungselement (16) verbundene Halter (1) durch formschlüssig ineinandergreifende Mittel gegen Verdrehen gegenüber dem Befestigungselement (16) gesichert ist.

2. Befestigungsvorrichtung nach Anspruch 1, **dadurch gekennzeichnet, daß** die Schnappkupplung (12, 23) mit Hilfe eines Werkzeugs aus der Verriegelungsstellung lösbar ist.

3. Befestigungsvorrichtung nach einem der vorhergehenden Ansprüche, **dadurch gekennzeichnet, daß** der Halter (1) auf seiner der Anlagefläche (5) abgekehrten Unterseite zwei nach unten abstehende Finger (8) mit seitlich vorspringenden Nasen (9) hat.

4. Befestigungsvorrichtung nach Anspruch 4, **dadurch gekennzeichnet, daß** jeder Finger (8) an einem durch parallele Schlitze (13) gebildeten, elastisch verformbaren Steg (14) des Halters (1) angebracht ist.

5. Befestigungsvorrichtung nach einem der vorhergehenden Ansprüche, **dadurch gekennzeichnet, daß** das Befestigungselement (16) zwei Rippen (28) aufweist, die den Halter (1) an seinen Längsseiten umgreifen.

6. Befestigungsvorrichtung nach einem der vorhergehenden Ansprüche, **dadurch gekennzeichnet, daß** die Mittelstellung durch Vorsprünge (27) am Halter (1) oder am Befestigungselement (16) festgelegt ist, die durch eine erhöhte Verschiebekraft überwindbar sind.

7. Befestigungsvorrichtung nach einem der vorhergehenden Ansprüche, **dadurch gekennzeichnet, daß** das Befestigungselement (16) einen Haltestift (17) aufweist, der in einem Loch eines Bauteils, insbesondere mit Hilfe eines federnden Rastelementes (18), verankerbar ist.

8. Befestigungsvorrichtung nach einem der vorhergehenden Ansprüche, **dadurch gekennzeichnet, daß** der Haltestift (17) des Befestigungselements (16) einen Flansch (19) aufweist, der das Kupplungsteil (23) trägt.

9. Befestigungsvorrichtung nach einem der vorhergehenden Ansprüche, **dadurch gekennzeichnet, daß** der Umfangsrand des Flansches (19) mit einer Dichtlippe (20), vorzugsweise aus weicherem Material, versehen ist.

10. Befestigungsvorrichtung nach einem der vorhergehenden Ansprüche, **dadurch gekennzeichnet, daß** das Kupplungsteil (23) des Befestigungselementes (16) einen rechteckigen Rahmen (22) mit einer rechteckigen Rahmenöffnung (24) aufweist, wobei die längeren Schenkel (25) des Rahmens (22) mit einem Flansch (19) des Befestigungselementes (16) durch Stützen (21) verbunden sind, die sich quer zur Rahmenebene erstrecken.

## Claims

1. A fastening device for an elongated object, in particular a wiring harness, with a holder (1) intended for attachment of the elongated object and having a seating surface (5) for the elongated object, and with a fastening element (16) connectable to the holder (1) for fastening the holder (1) to a component, with a plug-in snap coupling (12, 23) being provided for connecting the holder (1) to the fastening element (16), said snap coupling being adapted to be closed by a force directed against the upper side of the holder (1) and providing a connection between the holder (1) and the fastening element (16) that is slidable lengthwise to the wiring harness, **characterized in that** the one part (23) of the snap coupling has a recess with undercut while the other part (12) of the coupling has at least one resilient peg insertable in the recess and including a lateral projection snappingly engaging with the undercut of the recess, wherein the recess constructed in the manner of an elongated hole has a dimension lengthwise to the holder (1) that is greater than that of the resilient peg insertable in the holder (1), and the holder (1) slidable relative to the fastening element (16) is retainable on the fastening element (16) by retaining devices in a mid-position from which a displacement in opposite directions is possible with a defined expenditure of force, and that the holder (1) connected to the fastening element (16) is secured against rotation relative to the fastening element (16) by devices making positive engagement with one another.

2. The fastening device according to claim 1, **characterized in that** the snap coupling (12, 23) is releasable from the locked position by means of a tool.

3. The fastening device according to any one of the preceding claims, **characterized in that** the holder (1), on its underside facing away from the seating surface (5), comprises two fingers (8) protruding downward and having catch structures (9) projecting laterally.

4. The fastening device according to claim 4 [sic!], **characterized in that** each finger (8) is arranged on an elastically deformable bar (14) of the holder (1), formed by parallel slits (13).

5. The fastening device according to any one of the preceding claims, **characterized in that** the fastening element (16) comprises two ribs (28)embracing the holder (1) on its long sides.

6. The fastening device according to any one of the preceding claims, **characterized in that** the mid-position is defined by projections (27) provided on the holder (1) or on the fastening element (16), which projections can be overcome by an increased displacement force.

7. The fastening device according to any one of the preceding claims, **characterized in that** the fastening element (16) comprises a holding pin (17) anchorable in a hole of a component, in particular with the aid of a resilient catch element (18).

8. The fastening device according to any one of the preceding claims, **characterized in that** the holding pin (17) of the fastening element (16) comprises a flange (19) supporting the coupling part (23).

9. The fastening device according to any one of the preceding claims, **characterized in that** the peripheral edge of the flange (19) is provided with a sealing lip (20), preferably of softer material.

10. The fastening device according to any of the preceding claims, **characterized in that** the coupling part (23) of the fastening element (16) comprises a rectangular frame (22) having a rectangular framed aperture (24), wherein the long sides (25) of the frame (22) are connected to a flange (19) of the fastening element (16) by struts (21) extending transversely to the plane of the frame.

## Revendications

1. Dispositif de fixation pour un objet allongé, notamment un faisceau de câbles, comportant un organe de retenue (1), qui est prévu pour le montage de l'objet allongé, et possède une surface d'application (5) pour l'objet allongé, et comportant un élément de fixation (16) pouvant être relié à l'organe de retenue (1) pour fixer l'organe de retenue (1) sur un composant, dans lequel pour la liaison de l'organe de retenue (1) à l'élément de fixation (16) il est prévu un accouplement à déclic (12, 23), pouvant être réuni par enfichage, qui peut être fermé à l'aide d'une force dirigée contre la face supérieure de l'organe de retenue (1) et établit une liaison, déplaçable dans la direction longitudinale du faisceau de câbles, entre l'organe de retenue (1) et l'élément de fixation (16), **caractérisé en ce qu'**une partie d'accouplement (23) de l'accouplement à déclic comporte un évidement possédant une partie en dépouille et l'autre partie d'accouplement (12) comporte au moins un téton élastique, qui peut être enfiché dans l'évidement et possède une partie saillante latérale, qui s'encliquette dans la partie en dépouille de l'évidement, dans lequel l'évidement agencé à la manière d'un trou allongé possède une étendue dans la direction longitudinale de l'organe de retenue (1), qui est supérieure à celle du téton élastique, pouvant être enfiché dans l'organe de retenue (1), et l'organe de retenue (1) déplaçable par rapport à l'élément de fixation (16) peut être fixé par des moyens de retenue dans une position médiane sur l'élément de fixation (16), position à partir de laquelle un déplacement dans des directions opposées est possible, moyennant l'application d'une force définie, et que l'organe de retenue (1) relié à l'élément de fixation (16) peut être bloqué, par des moyens imbriqués selon une liaison par formes complémentaires, contre une rotation par rapport à l'élément de fixation (16).

2. Dispositif de fixation selon la revendication 1, **caractérisé en ce que** l'accouplement à déclic (12, 23) peut être ouvert, à partir de la position verrouillée, à l'aide d'un outil.

3. Dispositif de fixation selon l'une des revendications précédentes, **caractérisé en ce que** l'organe de retenue (1) possède, sur sa surface inférieure tournée à l'opposé de la surface d'application (5), deux doigts (8) qui font saillie vers le bas et comportent des becs (9) qui font saillie latéralement.

4. Dispositif de fixation selon la revendication 3, **caractérisé en ce que** chaque doigt (8) est monté sur une barrette (14) déformable élastiquement de l'organe de retenue (1), qui est définie par des fentes parallèles (13).

5. Dispositif de fixation selon l'une des revendications précédentes, **caractérisé en ce que** l'élément de fixation (16) comporte deux nervures (28), qui entourent l'organe de retenue (1) sur ses côtés longitudinaux.

6. Dispositif de fixation selon l'une des revendications précédentes, **caractérisé en ce que** la position médiane est fixée par des parties saillantes (27) qui sont situées sur l'organe de retenue (1) ou sur l'élément de fixation (16) et qui peuvent être franchies sous l'action d'une force de déplacement accrue.

7. Dispositif de fixation selon l'une des revendications précédentes, **caractérisé en ce que** l'élément de fixation (16) comporte une tige de retenue (17) qui peut être ancrée dans un trou d'un composant, notamment à l'aide d'un élément d'encliquetage élastique (18).

8. Dispositif de fixation selon une ou plusieurs des revendications précédentes, **caractérisé en ce que** la tige de retenue (17) de l'élément de fixation (16) comporte une bride (19), qui porte la partie d'accouplement (23).

9. Dispositif de fixation selon l'une des revendications précédentes, **caractérisé en ce que** le bord périphérique de la bride (19) est pourvu d'une lèvre d'étanchéité (20), réalisé de préférence en un matériau plus mou.

10. Dispositif de fixation selon l'une des revendications précédentes, **caractérisé en ce que** la partie d'accouplement (23) de l'élément de fixation (16) comporte un cadre rectangulaire (22) possédant une ouverture rectangulaire de cadre (24), les branches les plus longues (25) du cadre (22) étant reliées à une bride (19) de l'élément de fixation (16) par des appuis (21), qui s'étendent transversalement par rapport au plan du cadre.
